# DEMANDE DE BREVET EUROPEEN

(11) **EP 0 897 113 A2**
(43) Date de publication de la demande: **17.02.1999**
(21) Numéro de dépôt: 98401634.5
(22) Date de dépôt: 01.07.1998
(51) Int. Cl.: G01N 33/38, G01N 25/72

(54) **Procédé de détection de sulfures de nickel dans des substrats de verre**

(30) Priorité: 17.07.1997 FR 9709061
(71) Demandeur: SAINT-GOBAIN VITRAGE, 92400 Courbevoie (FR)
(72) Inventeur: Bordeaux, Frédéric, 92340 Bourg la Reine (FR); Kasper, Andreas, 6291 CK Vaals (NL)
(74) Mandataire: Muller, René

(57) **Abrégé**

L'invention a pour but un procédé de détection de sulfure de nickel dans des substrats en verre consistant en un traitement thermique, ledit traitement thermique comportant un palier d'une durée supérieure à une heure, dans une ambiance maintenue à une température inférieure à 250°C.

## Description

L'invention concerne un procédé de détection de sulfures de nickel dans des substrats en verre tels que des feuilles de verre trempées, semi-trempées ou durcies.

La présence de sulfures de nickel dans de tels substrats en verre est connue de la littérature mais leurs origines ne sont pas très claires. Des origines multiples ont déjà été envisagées ; il pourrait provenir de la réduction des sulfates de sodium et de la réaction avec l'oxyde de nickel en provenance par exemple des buses de brûleurs. Il s'avère en effet qu'aujourd'hui aucune origine spécifique n'a pu être déterminée mais que ces sulfures de nickel sont présents dans le verre sous la forme de billes. Ces billes si elles ne nuisent pas aux principales propriétés recherchées des substrats en verre conduisent tout de même à un problème important dans le cas notamment des feuilles de verre trempées. En effet, la présence de ces inclusions de sulfures de nickel conduit à des casses dites « spontanées » des feuilles de verre trempées bien après leur réalisation. Certains cas recensés ont montré une casse d'une telle feuille de verre trempée plus de dix années après sa fabrication. Cet inconvénient est lourd de conséquences puisque les feuilles de verre ont bien entendu déjà été vendues puis utilisées. Par ailleurs, ce type de vitrages étant notamment utilisé pour l'habillage extérieur de façades de bâtiment, une casse des vitrages après leur installation peut conduire à de graves accidents dus à la chute desdits vitrages depuis par exemple des façades de bâtiment ou bien des toits vitrés couvrant des passages pour piétons.

La détection de ces inclusions dans le verre est donc nécessaire notamment dans le cas des vitrages trempés.

Par ailleurs, les différentes compositions de sulfure de nickel à la source de ces problèmes ont déjà été mises en évidence. Il s'agit notamment du sulfure de nickel stoechiométrique NiS, le Ni₇S₆ et des sulfures de nickel sous-stoechiométriques en nickel NiS(₁₊ₓ) avec x variant de 0 à 0,08. Ces différentes compositions peuvent être présentes dans les vitrages sous la forme de billes cristallines, dont les diamètres pénalisants sont essentiellement compris entre 40 µm et 1 mm.

Le phénomène qualifié précédemment de casses « spontanées » mais différées dans le temps a également déjà été expliqué. Les casses liées à la présence de sulfures de nickel dans le verre sont provoquées par la dilatation de volumes accompagnant la transformation de la phase α (phase hexagonale) à la phase β (phase rhomboédrique). La phase α est la phase haute température des sulfures de nickel, qui est métastable à température ambiante. La phase β est la phase basse température, stable à température ambiante. Il est ainsi compréhensible que si des sulfures de nickel existent dans leur phase α au sein de feuilles de verre prêtes à être utilisées ou déjà utilisées, des transformations vers la phase β vont apparaître au cours du temps.

La présence de sulfures de nickel dans leur phase α au sein de feuilles de verre à température ambiante s'explique, notamment dans le cas des feuilles de verre trempées, par le traitement thermique qu'elles ont subi ; en effet, dans le cas d'une trempe thermique, l'élévation de température de la feuille de verre peut conduire à l'apparition de phase α si des sulfures de nickel sont présents. Le refroidissement rapide qui suit ne permet pas du fait de sa vitesse un retour complet vers une phase β. Les feuilles de verre ainsi traitées peuvent donc comporter des sulfures de nickel en phase α qui vont se transformer dans le temps vers une phase β, ladite transformation s'accompagnant d'une augmentation de volume pouvant générer une casse des feuilles de verre.

Comme énoncé précédemment, il est donc nécessaire de détecter les feuilles de verre comportant de tels sulfures de nickel susceptibles de provoquer une casse des feuilles de verre au cours du temps.

Des méthodes de détection des sulfures de nickel ont déjà été présentées dans l'art antérieur. Une première méthode que l'on peut qualifier de « manuelle » consiste à repérer à l'aide d'un polariscope les contraintes particulières générées autour des billes de sulfures de nickel. Une telle méthode est délicate à mettre en oeuvre et inévitablement d'une durée très importante, ce qui augmente considérablement les coûts de production.

Un autre type de méthode de détection des sulfures de nickel, habituellement appelé Heat Soak Test, consiste à accélérer la transformation de la phase α, haute température, vers la phase β, basse température, par rapport à la vitesse de transformation à température ambiante. Pour cela, il a déjà été mis en évidence que la vitesse de transformation est fonction de la température et que ladite vitesse augmente avec la température. En conséquence, la température optimale pour une vitesse la plus rapide possible de ladite transformation est définie par la limite supérieure de stabilité de la phase β pour toutes les compositions de sulfure de nickel responsables des casses. Cette température est égale à 282°C. La mise en oeuvre de cette méthode consiste à placer les feuilles de verre dans une étuve atmosphérique, la durée totale de cette méthode étant comprise entre huit et quinze heures. Cette méthode de détection est réalisée en trois étapes. La première étape consiste à élever la température des substrats depuis une température ambiante de stockage, habituellement comprise entre 20 et 50°C, jusqu'à la température de détection proprement dite ou température de consigne, avantageusement égale à 282°C, comme cela vient d'être expliqué. Cette première étape de montée en température est relativement lente pour éviter tout risque de choc thermique. La seconde étape consiste en un palier à une température de l'ordre de 282°C. La durée de ce palier est d'au moins trois heures et est souvent bien supérieure. La dernière étape, qui est une phase de sortie, consiste à refroidir les substrats. Cette étape est très lente pour éviter tout risque de déformation, même momentanée, des substrats en verre qui sont habituellement disposés sur des chariots porteurs ; cette disposition sur des chariots peut, en cas de déformation des substrats, conduire à un contact desdits substrats et donc soit à une dégradation de leurs surfaces soit à leur casse.

Au terme de la période de plusieurs heures correspondant au palier, la transformation vers la phase stable à température ambiante, ou phase β, s'est opérée pour les sulfures de nickel présents dans des feuilles de verre et a conduit à la destruction desdites feuilles de verre comportant des sulfures de nickel présent sous forme de phase α à l'entrée dans l'étuve. Une telle méthode de détection est satisfaisante car elle permet d'éliminer les vitrages qui auraient conduit ultérieurement à une casse due à la présence de sulfures de nickel. Par contre, cette méthode nécessite un temps relativement long de traitement et en conséquence un stockage intermédiaire des feuilles de verre qui conduisent à un surcoût important du prix de revient des feuilles de verre.

Par ailleurs, les temps relativement longs de traitement entraînent des coûts énergétiques importants pour maintenir les températures désirées du fait d'une part, des températures à obtenir, et d'autre part, du temps de maintien desdites températures.

Les inventeurs se sont ainsi donnés pour mission d'élaborer une méthode pour la détection des sulfures de nickel, dans des feuilles de verre susceptibles de se casser ultérieurement du fait de ces sulfures de nickel, conduisant à un surcoût de production inférieur à ceux entraînés par les méthodes précédentes.

Les inventeurs proposent un procédé de détection de sulfure de nickel dans les substrats en verre consistant en un traitement thermique avec un palier de traitement d'une durée supérieure à une heure, dans une ambiance maintenue à une température inférieure à 250°C.

Selon une réalisation préférée, la durée du palier est inférieure à 10 heures et l'ambiance est maintenue à une température fixée entre 190 et 250°C.

De préférence encore, la durée du palier est inférieure à deux heures et l'ambiance est maintenue à une température fixée entre 230 et 250°C.

Les inventeurs ont donc ainsi mis en évidence qu'il était possible d'opérer une détection de sulfure de nickel, pouvant conduire à une casse des feuilles de verre, à des températures inférieures à 250°C et donc à des températures très faibles comparées à celles connues de l'homme du métier pour ce type de détection.

Il apparaît encore que ces faibles températures peuvent, pour les gammes de températures évoquées plus haut, être associées à des temps de traitement relativement courts, notamment compris entre 1 et 2 heures. Il s'avère donc qu'un tel procédé de détection peut autoriser une limitation du surcoût d'une part par des températures peu élevées donc des coûts énergétiques diminués et d'autre part, par des temps de traitement inférieurs à ceux habituellement pratiqués.

Les procédés de détection de sulfure de nickel ainsi décrits selon l'invention présentent d'autres avantages; en effet, notamment dans le cas de feuilles de verre trempées, un traitement thermique subi par ces feuilles de verre conduit à une détérioration des contraintes crées lors de la trempe. Il est connu que ces détériorations sont d'autant plus importantes que les températures du traitement thermique sont élevées et que la durée du traitement est importante. En conséquence, les diminutions de température et éventuellement du temps de traitement, par rapport aux techniques antérieures, obtenues avec le procédé de détection de sulfure de nickel selon l'invention permettent donc une moindre détérioration des contraintes obtenues après trempe.

Les traitements de trempe plus intensifs habituellement utilisés pour obtenir des contraintes supérieures à celles requises, prévus pour compenser les dégradations ultérieures peuvent ainsi être évitées. Ainsi selon l'invention, il est également possible d'améliorer les propriétés du verre telles que ses propriétés optiques qui sont habituellement dégradées du fait de traitement de trempe plus intensifs.

Selon une réalisation avantageuse de l'invention, la phase de montée en température est diminuée par un passage immédiat d'une température ambiante comprise entre 20 et 50°C à la température de palier. Les techniques antérieures consistent habituellement à élever la température des substrats en verre de façon progressive ; les inventeurs ont su mettre en évidence que les substrats préalablement trempés, semi-trempés ou durcis, ne subissent aucune dégradation lors d'un passage instantanée dans une ambiance proche de 250°C. Avantageusement encore, la phase de montée en température est supprimée ou, plus précisément évitée, les substrats étant traités immédiatement après une étape précédente, telle qu'une trempe, à la sortie de laquelle les substrats en verre peuvent être récupérés à la température souhaitée, par exemple, de l'ordre de 250°C.

Par ailleurs selon une autre réalisation avantageuse, l'invention prévoit une phase de refroidissement des substrats ou phase de sortie dont la durée est inférieure à une demi-heure. L'invention prévoit encore avantageusement un passage direct des substrats depuis la température de palier à une température de l'ordre de 20 à 50°C. Les inventeurs ont en effet su mettre en évidence qu'un passage rapide à une température relativement basse pouvait être supporté par les substrats dès lors que ceux-ci sont soit refroidis de manière symétrique sur les deux faces, soit suffisamment espacés les uns des autres et/ou maintenus de manière souple. Les techniques antérieures préconisent habituellement comme énoncé précédemment un refroidissement relativement lent pour éviter tout risque de contact entre les substrats dus à des déformations momentanées possibles des vitrages.

Selon une première variante de l'invention, le procédé de détection consiste à placer le substrat en verre dans un bain liquide thermostaté.

Selon cette variante de l'invention, il est possible d'obtenir une température d'ambiance ou est maintenu le substrat, égale à la consigne en tout point du liquide. De préférence, le liquide est une huile telle qu'une huile silicone. Le choix d'un tel liquide permet notamment de ne pas avoir de problèmes d'ébullition jusqu'à 300°C.

Selon une autre variante de l'invention, le substrat en verre est placé dans une enceinte atmosphérique dans laquelle l'atmosphère régnant possède une température homogène, en tout point, du volume défini par l'enceinte.

Selon cette autre variante, l'invention prévoit avantageusement une enceinte comportant une double chambre, la seconde chambre intervenant pour le refroidissement.

Selon l'une ou l'autre des variantes de réalisation de l'invention, le substrat en verre est avantageusement conduit dans l'ambiance à la température par exemple de l'ordre de 250°C alors qu'il possède une température supérieure et de préférence voisine de 250°C, notamment pour éviter une phase de mise en température à 250°C.

Lors de leurs études, les inventeurs ont également mis en évidence que le problème lié aux sulfures de nickel n'est pas limité aux feuilles de verre trempées thermiquement mais qu'il peut également concerner d'autres types de verre tels que des verres durcis et semi-trempés.

Dans le cas de substrats en verre trempés, durcis ou semi-trempés, tels que des feuilles de verre, le procédé selon l'invention prévoit avantageusement que lesdits substrats pénètrent l'ambiance à la température fixée, immédiatement en sortie du traitement précédent, par exemple la trempe.

Cette dernière variante selon l'invention présente un double avantage : tout d'abord, ce procédé permet de pouvoir effectuer une détection sans étape de chauffe préalable et sans attendre un refroidissement complet après trempe; une telle réalisation permet bien entendu de gagner du temps et donc de limiter encore le surcoût dû à la détection. De plus, ce procédé peut être réalisé en ligne suite à la trempe. Cela permet encore de diminuer le surcoût de production puisque aucun stockage n'est nécessaire.

L'invention prévoit de même dans un cas plus général, c'est-à-dire non limité à des substrats trempés, une réalisation du procédé de détection en ligne, pour éviter tout stockage intermédiaire des substrats.

Un autre avantage possible du procédé de détection réalisé en ligne selon l'invention est lié au fait que les substrats en verre peuvent être traités au défilé et donc un par un. Comme énoncé précédemment, la phase de sortie du procédé de détection ne nécessite alors aucune précaution, lesdits substrats ne pouvant pas être au contact les uns des autres lors de leur refroidissement. De plus, une telle réalisation permet également de diminuer la dissymétrie de refroidissement desdits substrats. Cette phase de sortie peut donc être très rapide, notamment par rapport aux techniques connues.

L'invention prévoit encore dans une variante, une étape complémentaire consistant en une épreuve thermique, telle qu'un choc thermique. Il peut apparaître, après le traitement thermique selon l'invention, que des billes de sulfure de nickel subsistent dans les substrats en verre. De telles billes sont en elles-mêmes sans risque pour le substrat en verre, car soit elles sont stables, soit elles évoluent très peu au cours du temps, sans risque d'entraîner une casse des substrats.

Par contre, il apparaît que la présence de ces billes associées à des contraintes mécaniques peut entraîner une casse des substrats en verre ; ces contraintes mécaniques sont par exemple le vent ou des chocs thermiques pour des vitrages fixés sur des façades da bâtiment.

L'étape complémentaire précédemment évoquée permet de simuler de telles contraintes mécaniques et donc d'éliminer les substrats en verre comportant ces billes.

Une telle étape complémentaire permet en outre d'éliminer les substrats comportant des inclusions susceptibles d'entraîner la casse desdits substrats en combinaison avec des forces mécaniques, quelle que soit la nature de ces inclusions ; la nature des inclusions n'est pas limitée au sulfure de nickel.

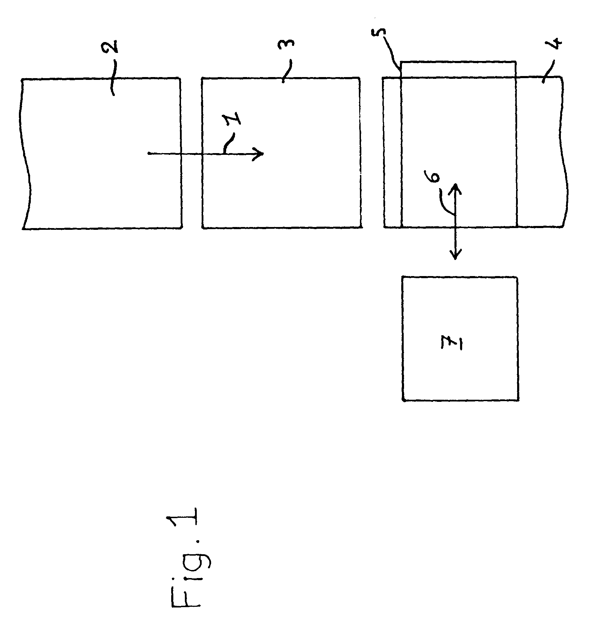

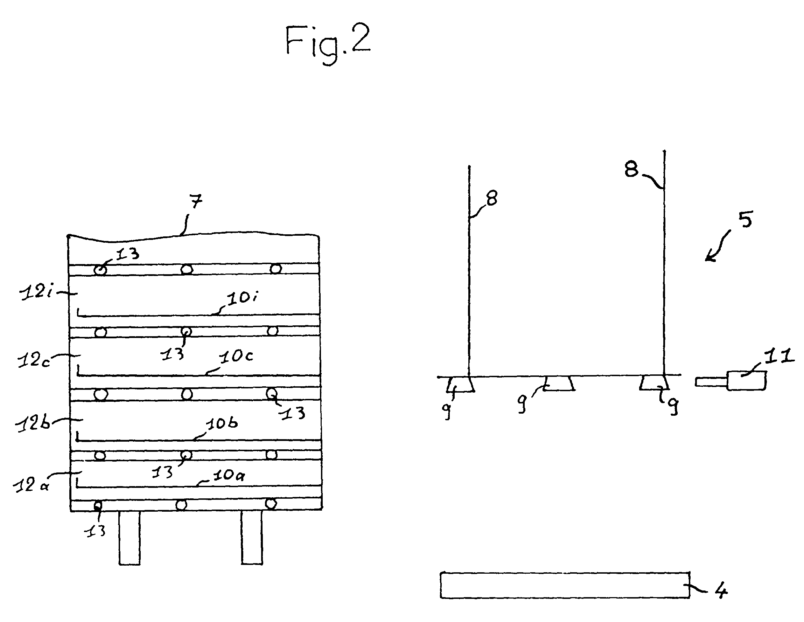

D'autres détails et caractéristiques avantageuses ressortiront ci-après de la description d'un exemple de réalisation d'une installation selon l'invention en référence aux figures 1 et 2 qui représentent :
□ **figure 1** : un schéma d'une installation selon l'invention,
□ **figure 2** : un schéma d'une vue de côté d'une partie de l'installation.

L'exemple d'installation qui sera décrit en référence aux figures 1 et 2 consiste à faire pénétrer des feuilles de verre trempées dans une ambiance à 230°C immédiatement après l'étape de trempe. Comme énoncé précédemment, le passage dans l'ambiance à 230°C immédiatement après la trempe permet d'éviter la phase de montée en température des feuilles de verre.

Sur la figure 1, est schématisé par la flèche 1 le sens de défilement des feuilles de verre non représentées sur les figures. Les feuilles de verre traversent initialement un four 2 du type four tunnel pour être amenées à leur température de trempe puis passent au travers de la zone de trempe 3. Les feuilles de verre trempées sont ensuite transportées par un convoyeur de sortie 4, du type à rouleaux, vers une zone de refroidissement secondaire non représentée sur les figures.

En sortie de zone de trempe, les verres sont interceptés sur le convoyeur de sortie par un préhenseur 5. Ce préhenseur permet de soulever la feuille de verre du convoyeur par tous moyens connus de l'homme du métiers, tels que des ventouses 9 ou un plateau aspirant. La feuille de verre associée au préhenseur 5 est donc élevée par rapport au plan du convoyeur puis dirigée selon une direction indiquée par la flèche 6, perpendiculaire au trajet indiqué par la flèche 1, vers une enceinte 7 dans laquelle elle subit le traitement thermique. Il sera revenu ultérieurement sur cette enceinte 7.

Suite au traitement thermique, les feuilles de verre sont replacées à l'aide du préhenseur 5 sur le convoyeur de sortie 4 pour être amenées dans la zone de refroidissement secondaire.

Sur la figure 2, sont décrits plus précisément le préhenseur 5 et l'enceinte 7 dans laquelle est effectuée le traitement thermique. Le mouvement selon une direction verticale du préhenseur 5 peut être effectué par tous moyens connus de l'homme du métier et par exemple comme indiqué sur la figure par un système de câbles 8 et poulies, non représentés sur la figure. Ce mouvement vertical permet d'élever les feuilles de verre depuis le convoyeur de sortie et d'autre part de les redéposer sur celui-ci. Concernant le déplacement selon la flèche 6, celui-ci peut également être obtenu par tous moyens connus de l'homme du métier. Selon la représentation, la feuille de verre associée au préhenseur 5 peut être déposée sur un tiroir 10i monté mobile au sein de l'enceinte 7. Pour effectuer le mouvement selon la direction de la flèche 6, le tiroir 10i est actionné par un dispositif 11, tel qu'un vérin hydraulique, qui vient accrocher le tiroir pour l'amener sous la feuille de verre tenue par les ventouses 9. La feuille de verre est lâchée sur le tiroir 10i qui est ramenée dans l'enceinte 7, toujours à l'aide du dispositif 11. Ce mouvement sert d'une part à faire pénétrer les feuilles de verre dans l'enceinte puis à les en ressortir après le traitement thermique pour les ramener au-dessus du convoyeur de sortie 4.

Selon l'exemple de réalisation représenté sur la figure 2, l'enceinte 7 est constituée de plusieurs casiers 12a, 12b, 12c, 12i, ... superposés les uns aux autres, chacun d'entre eux étant destinés à recevoir une feuille de verre et comportant un tiroir 10i. Par ailleurs, chacun de ces casiers 12a, ..., 12i comportent des éléments de chauffage tels que des résistances 13, indépendantes pour chacun des casiers. Une telle enceinte 7 permet notamment de garantir une bonne précision de la consigne de température imposée.

L'exemple de dispositif selon l'invention ainsi proposée autorise le traitement thermique en ligne des verres trempés pour la détection des sulfures de nickel. Ce dispositif permet en outre d'éliminer la phase de montée en température ; les feuilles de verre sont en effet interceptées par le préhenseur 5 à une température voisine de 230°C ; elles pénètrent ainsi l'enceinte 7 et plus précisément un casier 12i à cette température. Les feuilles de verre ainsi amenées dans les casiers 12i sont donc à une température proche de la température de consigne. En outre, la phase de refroidissement est également supprimée ; les feuilles de verre sont sorties de l'enceinte 7 une par une et ne subissent donc pas de dissymétrie de refroidissement et ne peuvent également pas venir au contact les unes des autres. La durée du traitement thermique est donc ramenée à celle du palier. Des essais ont été réalisés avec des feuilles de verre d'une épaisseur de 6 mm. Sur les installations utilisées, une feuille de verre d'une dimension de 2500 x 2500 mm est délivrée toutes les 4 minutes. La durée du palier du traitement thermique a été de une heure trente minutes avec une consigne de 230°C ; ladite consigne a été obtenue avec une précision de 10°C dans chaque casier 12i. Le nombre de casiers 12i prévu est de 16 de façon à pouvoir opérer en ligne avec la cadence de production de telles feuilles de verre trempées.

Les résultats sont tout-à-fait satisfaisants ; les feuilles de verre ainsi obtenues ont été retestées par les moyens classiques de détection de sulfure de nickel précédemment évoqués et ces tests n'ont révélés la présence d'aucune bille de sulfure de nickel dangereuse.

L'invention ainsi décrite permet, comme il l'a été dit, une détection de sulfures de nickel dans des substrats en verre très rapide, par rapport aux techniques antérieures, et donc moins onéreuse.

## Revendications

1. Procédé de détection de sulfure de nickel dans des substrats en verre consistant en un traitement thermique ***caractérisé en ce que*** le traitement thermique comporte un palier d'une durée supérieure à une heure, dans une ambiance maintenue à une température inférieure à 250°C.

2. Procédé selon la revendication 1, ***caractérisé en ce que*** la durée du palier est inférieure à 10 heures et en ce que l'ambiance est maintenue à une température fixée entre 190 et 250°C.

3. Procédé selon l'une des revendications 1 ou 2, ***caractérisé en ce que*** la durée du palier est inférieure à deux heures et en ce que l'ambiance est maintenue à une température fixée entre 230 et 250°C.

4. Procédé selon l'une des revendications précédentes, ***caractérisé en ce que*** le substrat en verre est placé dans un bain liquide thermostaté.

5. Procédé selon la revendication 4, ***caractérisé en ce que*** le liquide est une huile telle qu'une huile silicone.

6. Procédé selon l'une des revendications 1 à 3, ***caractérisé en ce que*** le substrat en verre est placé dans une enceinte atmosphérique et ***en ce que*** l'atmosphère régnant dans l'enceinte possède une température homogène.

7. Procédé selon l'une des revendications précédentes, ***caractérisé en ce*** qu'on conduit le substrat en verre dans l'ambiance maintenue à une température fixée, celui-ci possédant une température voisine de ladite température de l'ambiance.

8. Procédé selon l'une des revendications précédentes, ***caractérisé en ce que*** le substrat est une feuille de verre trempée.

9. Procédé selon la revendication 8, ***caractérisé en ce que*** le substrat pénètre l'ambiance immédiatement en sortie de trempe.

10. Procédé selon l'une des revendications précédentes, ***caractérisé en ce que*** le traitement thermique du substrat est réalisé en ligne.

11. Procédé selon l'une des revendications précédentes, ***caractérisé en ce qu****'il* comporte une étape ultérieure au traitement consistant en une épreuve thermique.
